# EUROPÄISCHE PATENTANMELDUNG

(11) **EP 0 568 871 A1**
(43) Veröffentlichungstag der Anmeldung: **10.11.1993**
(21) Anmeldenummer: 93106572.6
(22) Anmeldetag: 22.04.1993
(51) Int. Cl.: B01J 35/04, B01J 38/00

(54) **Verfahren und Vorrichtung zur Reinigung eines wabenförmigen Katalysators**

(30) Priorität: 05.05.1992 DE 4214856
(71) Anmelder: SIEMENS AKTIENGESELLSCHAFT, D-80333 München (DE)
(72) Erfinder: Hüttenhofer, Klaus, Dipl.-Ing., D-90562 Heroldsberg (DE); Mack, Hanns, W-8520 Erlangen (DE); Schmitt, Manfred, W-8647 Stockheim (DE)

(57) **Zusammenfassung**

Bei der Reinigung von verstopften Gaskanälen eines wabenförmigen Katalysators mit einem Reinigungsstab kann der Katalysator leicht durch das Verkanten des Reinigungsstabs beschädigt werden. Außerdem ist zur Reinigung der verstopften Gaskanäle ein hoher Zeitaufwand erforderlich.

Zur Verkürzung der Reinigungszeit und zur Vermeidung von Beschädigungen des Katalysators ist erfindungsgemäß eine Vorrichtung vorgesehen, bei der eine Anzahl von Reinigungsstäben, deren Durchmesser und Länge an die innere Geometrie und Länge der Gaskanäle des Katalysators angepaßt sind, an einer Halterungsvorrichtung parallel zueinander und dem Raster der Gaskanäle des Katalysators entsprechend beabstandet befestigt sind.

Die Erfindung kann prinzipiell zur Reinigung jedes wabenförmigen Katalysators benutzt werden.

## Beschreibung

Die Erfindung bezieht sich auf ein Verfahren und eine Vorrichtung zur Reinigung eines wabenförmigen Katalysators, insbesondere eines DeNOₓ-Katalysators, dessen Gaskanäle durch Ablagerungen verstopft sind.

Wabenförmige Katalysatoren werden beispielsweise als sogenannte DeNOₓ-Katalysatoren zur Verminderung der Stickoxide in Rauchgas eingesetzt. Hierzu werden wabenförmige Katalysatorelemente modulweise zusammengefaßt und in der Rauchgasleitung von Verbrennungsanlagen eingebaut. Das durch die Gaskanäle des Katalysators strömende Rauchgas ist - auch bei vorheriger Filterung und Rauchgaswäsche - noch mit Aschepartikeln und Flugstaub beladen.

Mit fortschreitender Einsatzdauer des wabenförmigen Katalysators führt die Ablagerung von Flugstaub und Aschepartikeln in den Gaskanälen des Katalysators zu einer allmählichen Verstopfung der Gaskanäle. Die Ablagerungen in den Gaskanälen sind im allgemeinen jedoch nur gering verdichtet.

Zur Entfernung von Ablagerungen aus verstopften Gaskanälen wurden die Gaskanäle bisher mit Druckluft oder mit einem gerade verfügbaren Stab gereinigt. Bei dieser Art der Reinigung ist jedoch einerseits ein sehr hoher Zeitaufwand erforderlich, andererseits ist gelegentlich auch eine mechanische Beschädigung des Katalysators, beispielsweise durch geringes Verkanten des Stabes, aufgetreten. Auch wurde der Staub durch das Blasen mit Druckluft teilweise so verdichtet, daß er aus den Kanälen nicht mehr entfernt werden konnte.

Der Erfindung liegt daher die Aufgabe zugrunde, ein Verfahren und eine Vorrichtung anzugeben, die es erlauben, die verstopften Gaskänale eines Katalysatorelements mit geringem Zeitaufwand zu reinigen. Zusätzlich soll auch die Gefahr einer mechanischen Beschädigung des Katalysators vermieden werden.

Bezüglich des Verfahrens wird die Aufgabe erfindungsgemäß dadurch gelöst, daß mindestens ein Reinigungsstab, dessen Abmessungen an die innere Geometrie der Gaskanäle des Katalysators angepaßt sind, in die Gaskanäle eingeführt und durchgeschoben wird, wobei die Längsachse jedes Reinigungsstabes während des Schiebevorgangs parallel zur Längsachse der Gaskanäle orientiert wird. Hierdurch werden die im allgemeinen nur gering verdichteten Ablagerungen mittels des Reinigungsstabes aus dem Gaskanal herausgedrückt.

Bezüglich der Vorrichtung wird die Aufgabe erfindungsgemäß dadurch gelöst, daß eine Anzahl von Reinigungsstäben, deren Durchmesser und Länge an die innere Geometrie und Länge der Gaskanäle des Katalysators angepaßt ist, an einer Halterungsvorrichtung parallel zueinander und dem Raster der Gaskanäle des Katalysators entsprechend beabstandet befestigt sind. Hiermit ist es möglich, mehrere Gaskanäle des Katalysators gleichzeitig zu reinigen.

Eventuell durch unsachgemäßen Gebrauch beschädigte Reinigungsstäbe können vorteilhafterweise ausgewechselt werden, wenn jeder Reinigungsstab für sich allein auswechselbar befestigt ist.

Zum leichten Einfädeln der Reinigungsstäbe in die Gaskanäle des Katalysators kann eine Einfädelvorrichtung für die Einfädelung der an der Halterungsvorrichtung befestigten Reinigungsstäbe in die Gaskanäle des Katalysators vorgesehen sein. Hierdurch verringert sich die Gefahr der Beschädigung des Katalysators.

Eine einfach herstellbare und leicht benutzbare Einfädelvorrichtung kann eine dem Raster der Gaskanäle entsprechende gelochte Platte umfassen, die mit mindestens einem Gaskanal in Eingriff steht. Hierdurch können die Reinigungsstäbe direkt über den Gaskanälen zu diesen mittig zentriert werden.

In vorteilhafter Ausgestaltung der Erfindung kann die gelochte Platte über senkrecht zur Lochplattenebene angeordnete Führungsstäbe mit einer Halteplatte verbunden sein, wobei die Halterungsvorrichtung zwischen der gelochten Platte und der Halteplatte längs der Führungsstäbe verschiebbar ist und wobei die Reinigungsstäbe nur geringfügig länger sind als der Abstand zwischen der gelochten Platte und der Halteplatte. Hierdurch ist die permanente Führung der Reinigungsstäbe in der gelochten Platte durch die Führung der Halterungsvorrichtung gewährleistet. Das Einfädeln der Reinigungsstäbe in die gelochte Platte erfolgt hierbei nur bei der Erstmontage der Vorrichtung. Weil die gelochte Platte der Vorrichtung senkrecht zu den Führungsstäben ausgerichtet ist, ist beim Aufsetzen der gelochten Platte auf die Stirnfläche der Katalysatorwabe nicht nur eine Zentrierung der Reinigungsstäbe mittels der vorstehenden Führungsstäbe zu den Gaskanälen gewährleistet, sondern zugleich auch sichergestellt, daß die Reinigungsstäbe zur Längsachse der Gaskanäle parallel ausgerichtet sind. Hierdurch wird eine Beschädigung der Wände der Gaskanäle zuverlässig ausgeschlossen.

Damit jeder Gaskanal durch einen einmaligen Einschiebevorgang eines Reinigungsstabes gereinigt werden kann, ist es sinnvoll, wenn der Hub der Haltevorrichtung zwischen der gelochten Platte und der Halteplatte mindestens so groß ist wie die Länge der Gaskanäle in dem zu reinigenden Katalysator.

Zur Vermeidung einer weiteren Verdichtung der Ablagerungen während des Reinigungsvorgangs können die Reinigungsstäbe Hohlzylinder sein. Die von dem Reinigungsstab verdrängten Ablagerungen können auf diese Weise zunächst in die Hohlräume der Reinigungsstäbe eindringen und werden nicht vor dem Reinigungsstab hergeschoben und womöglich verdichtet.

Zur Unterstützung der Reinigungswirkung können die hohlzylindrischen Reinigungsstäbe an ein Spülmedium anschließbar sein. Hierdurch kann einerseits, beispielsweise mittels Druckluft der Reinigungsgrad in dem Gaskanal verbessert werden. Andererseits können die verdrängten Ablagerungen, auch durch das Evakuieren der hohlzylindrischen Reinigungsstäbe, abgesaugt werden.

Ein Ausführungsbeispiel der Erfindung wird anhand der Zeichnung näher erläutert. Dabei zeigen:
- Figur 1: eine Seitenansicht der erfindungsgemäßen Vorrichtung;
- Figur 2: eine Draufsicht auf die erfindungsgemäße Vorrichtung;
- Figur 3: eine Seitenansicht auf einen Reinigungsstab; und
- Figur 4: eine Seitenansicht auf einen Führungsstab.

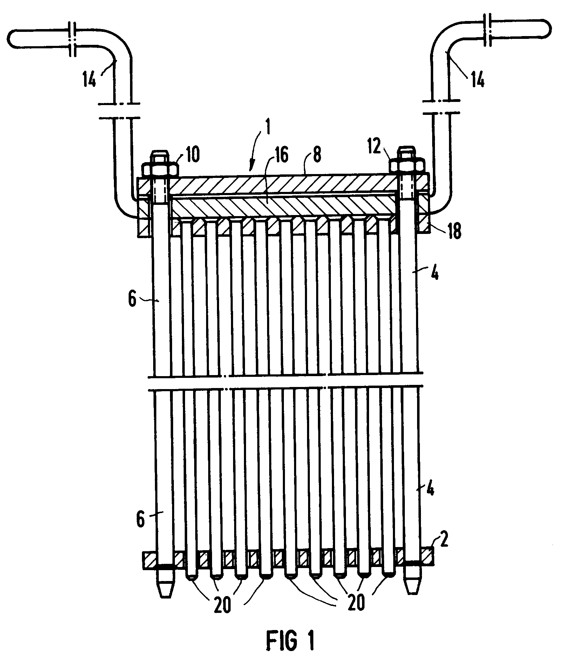

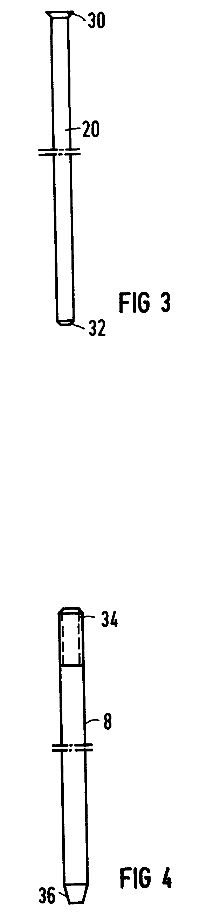

die in Figur 1 dargestellte Vorrichtung 1 umfaßt zwei relativ zueinander bewegliche Einheiten. Die erste Einheit setzt sich aus einer gelochten Platte 2, den in Figur 4 dargestellten Führungsstäben 4, 6, einer Halteplatte 8 sowie den auf die Gewinde der Führungsstäbe 4, 6 gedrehten Muttern 10, 12 zusammen. Die zweite Einheit setzt sich aus einem Betätigungsgriff 14, der an eine Deckplatte 16 montiert ist sowie einer Senkplatte 18 zusammen, in die die Reinigungsstäbe 20 auswechselbar eingesteckt sind. Die Deckplatte 16 ist mit einer (nicht dargestellten) Schraubverbindung lösbar auf die Senkplatte 18 montiert.

Bei der vorgesehenen Reinigung von Waben mit einer Länge der Gaskanäle von 800 mm und eines Wandabstands der quadratischen Gaskanäle von 5 mm hat der in Figur 3 gezeigte zylindrische Reinigungsstab 20 eine Länge von etwa 978 mm, einen Durchmesser von etwa 3,5 mm und ist aus Federstahl hergestellt. Die Kopfseite 30 ist auf einer Länge von 1 mm um 45° gestaucht. Die Fußseite 32 des Reinigungsstabs 20 ist auf einer Länge von 0,3 mm mit einem Winkel von 45° abgedreht. Der Reinigungsstab 20 wird durch die gestauchte und dabei im Durchmesser vergrößerte Kopfseite 30 am Herausfallen aus der Senkplatte 18 gehindert.

Der in Figur 4 gezeigte Führungsstab 8 hat im Ausführungsbeispiel eine Länge von etwa 1000 mm, einen Durchmesser von etwa 5 mm und ist aus Federstahl hergestellt. Die Kopfseite 34 des Führungsstabes 8 hat auf einer Länge von etwa 12 mm ein M5-Gewinde und ist auf dem letzten halben Millimeter um einen Winkel von 45° abgedreht. Die Fußseite 36 des Führungsstabes 8 verjüngt sich konisch auf den letzten 4 mm Länge mit einem Winkel von 10°.

Zur Reinigung der verstopften Gaskanäle eines wabenförmigen Katalysators wird die Vorrichtung 1 so auf die Wabenstruktur abgesenkt, daß zuerst die aus der gelochten Platte 2 herausragenden konischen Spitzen der Führungsstäbe 4, 6 in jeweils einen Gaskanal des Katalysators eingreifen. Hierdurch ist die Zentrierung der Reinigungsstäbe 20 über jeweils einem Gaskanal gewährleistet. Nach einem weiteren geringen Absenken der Vorrichtung 1 liegt die gelochte Platte 2 auf dem Katalysator auf, wobei jeder Reinigungsstab mit einem Gaskanal in Eingriff steht. Mittels einer Gewichtsbelastung des Betätigungsgriffes 14 werden die Reinigungsstäbe 20 in die Gaskanäle eingeschoben. Hierbei werden die Deckplatte 16, die Senkplatte 18 und die Reinigungsstäbe 16 entlang der Führungsstäbe 4, 6 geführt. Durch die Führung wird eine Beschädigung des Katalysators aufgrund von Verkantungen und Querbelastungen vermieden.

Nachdem der gesamte Hub der Vorrichtung 1 ausgeschöpft ist, sind die Reinigungsstäbe 20 durch die Gaskanäle des Katalysators durchgestoßen worden. Nach dem Herausziehen der Reinigungsstäbe 20 aus den Gaskanälen des Katalysators haben die Gaskanäle, die im allgemeinen einen quadratischen Querschnitt besitzen, zumindest wieder einen kreisförmigen Durchlaß. Durch geringe mechanische Erschütterungen oder geringe Vibrationen des Katalysators können sich die noch in den Ecken der Gaskanäle befindlichen Ablagerungen lösen und aus den Gaskanälen nach unten herausfallen. Der mit der Vorrichtung 1 gereinigte Katalysator kann auf diese Weise wieder seiner bestimmungsgemäßen Aufgabe zugeführt werden.

Zum Austausch von eventuell bei dem Reinigungsvorgang beschädigten Reinigungsstäben sind die Muttern 10, 12 zu lösen und die Halteplatte 8 zu entfernen. Anschließend sind die (hier nicht dargestellten) Verschraubungen der Deckplatte 16 und der Senkplatte 18 zu lösen und die Deckplatte 16 zu entfernen. Die in die Senkplatte 18 eingelassenen Reinigungsstäbe 20 können dann problemlos aus der Senkplatte 18 herausgezogen und damit ausgewechselt werden.

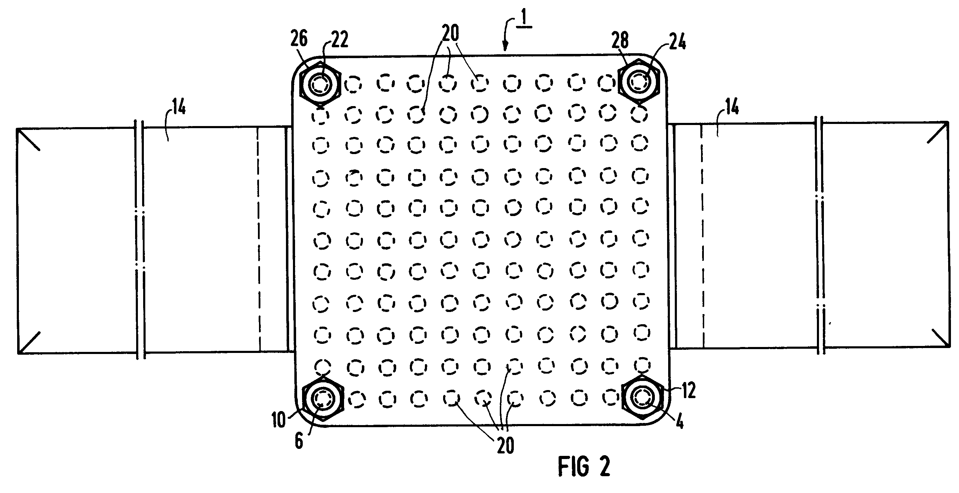

Die in Figur 2 gezeigte Draufsicht auf die Vorrichtung 1 verdeutlicht den Aufbau der in einer 11 x 11-Matrix angeordneten Reinigungsstäbe 18. Nur die Ecken der Matrix sind nicht durch Reinigungsstäbe 20, sondern durch die Führungsstäbe 4, 6, 22, 24 und deren Muttern 10, 12, 26, 28 besetzt. Zur Reinigung eines Wabenkatalysators mit einer 22 x 22-Matrix sind daher nur vier Reinigungsvorgänge mit dieser Vorrichtung 1 erforderlich, wenn man die durch die Positionierung der Führungsstäbe bedingten nicht gereinigten Gaskanäle außer Acht läßt.

## Patentansprüche

1. Verfahren zur Reinigung eines wabenförmigen Katalysators, insbesondere eines DeNOₓ-Katalysators, bei dem mindestens ein Reinigungsstab (20), dessen Abmessungen an die innere Geometrie der Gaskanäle des Katalysators angepaßt sind, in die Gaskanäle eingeführt und durchgeschoben wird, wobei die Längsachse des Reinigungsstabes während des Schiebevorgangs parallel zur Längsachse der Gaskanäle orientiert wird.

2. Vorrichtung zur Durchführung des Verfahrens nach Anspruch 1, **dadurch gekennzeichnet**, daß eine Anzahl von Reinigungsstäben (20), deren Durchmesser und Länge an die innere Geometrie und Länge der Gaskanäle des Katalysators angepaßt sind, in einer Halterungsvorrichtung parallel zueinander und dem Raster der Gaskanäle des Katalysators entsprechend beabstandet befestigt sind.

3. Vorrichtung nach Anspruch 2, **dadurch gekennzeichnet**, daß jeder Reingungsstab (20) für sich allein auswechselbar befestigt ist.

4. Vorrichtung nach Anspruch 2 oder 3, **gekennzeichnet durch** eine Einfädelvorrichtung für die Einfädelung der an der Halterungsvorrichtung (16, 18) befestigten Reinigungsstäbe (20) in die Gaskanäle des Katalysators.

5. Vorrichtung nach einem der Ansprüche 2 bis 4, **dadurch gekennzeichnet,** daß die Einfädelvorrichtung eine dem Raster der Gaskanäle entsprechend gelochte Platte (2) umfaßt, die mit mindestens einem Gaskanal in Eingriff steht.

6. Vorrichtung nach einem der Ansprüche 2 bis 5,
**dadurch gekennzeichnet,** daß die gelochte Platte (2) über senkrecht zur Lochplattenebene angeordnete Führungsstäbe 4, 6) mit einer Halteplatte (8) verbunden ist, wobei die Halterungsvorrichtung (16, 18) zwischen der gelochten Platte (2) und der Halteplatte (8) längs der Führungsstäbe (4, 6) verschiebbar ist und wobei die Reinigungsstäbe (20) nur geringfügig länger sind als der Abstand zwischen der gelochten Platte (2) und der Halteplatte (8).

7. Vorrichtung nach einem der Ansprüche 2 bis 6,
**dadurch gekennzeichnet**, daß die aus der gelochten Platte (2) hervorstehenden Enden (36) der Führungsstäbe (4, 6) konisch verjüngt sind.

8. Vorrichtung nach einem der Ansprüche 2 bis 6, **dadurch gekennzeichnet,** daß der Hub der Halterungsvorrichtung (16, 18) zwischen der gelochten Platte (2) und der Halteplatte (8) mindestens so groß ist wie die Länge der Gaskanäle in dem zu reinigenden Katalysator.

9. Vorrichtung nach einem der Ansprüche 2 bis 7, **dadurch gekennzeichnet,** daß die Reinigungsstäbe Hohlzylinder sind.

10. Vorrichtung nach einem der Ansprüche 2 bis 8, **dadurch gekennzeichnet,** daß die hohlzylindrischen Reinigungsstäbe an ein Spülmedium anschließbar sind.
